# EUROPÄISCHE PATENTSCHRIFT

(11) **EP 3 045 694 B1**
(45) Veröffentlichungstag und Bekanntmachung des Hinweises auf die Patenterteilung: **20.12.2017**
(21) Anmeldenummer: 16150593.8
(22) Anmeldetag: 08.01.2016
(51) Int. Cl.: F01N 3/28, F01N 3/021, F01N 3/20, F01N 13/08, F01N 13/18, F16L 3/10

(54) **STÜTZRING FÜR EIN ABGASFÜHRUNGSSYSTEM**
SUPPORT RING FOR EXHAUST GAS CONDUIT SYSTEM
BAGUE D'APPUI POUR UN SYSTEME D'ECHAPPEMENT DE GAZ

(30) Priorität: 15.01.2015 DE 102015100552
(43) Veröffentlichungstag der Anmeldung: 20.07.2016
(73) Patentinhaber: Eberspächer Exhaust Technology GmbH & Co. KG, 66539 Neunkirchen (DE)
(72) Erfinder: Ferencak, Marcel, 73760 Ostfildern (DE)
(74) Vertreter: RLTG

(56) Entgegenhaltungen:
- WO-A1-2011/066041
- JP-A- 2000 018 029
- JP-A- 2009 150 242

## Beschreibung

Die vorliegende Erfindung betrifft einen Stützring, welcher beispielsweise in einem Abgasführungssystem einer Brennkraftmaschine eines Fahrzeugs eingesetzt werden kann, um eine Abstützwirkung für eine im Abgasführungssystem vorgesehene Abgasbehandlungsanordnung, beispielsweise Katalysatoranordnung, zu erzeugen.

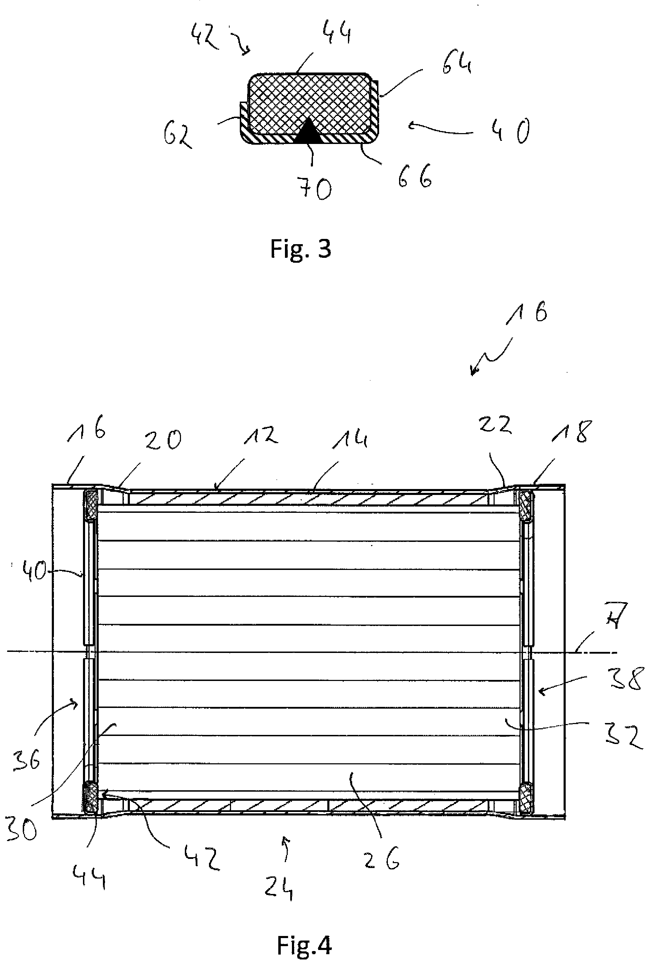

In Fig. 4 ist eine Abgasführungsbaugruppe 10 für ein Abgasführungssystem dargestellt vorgesehen. Diese Abgasführungsbaugruppe 10 umfasst ein rohrartiges Abgasführungselement 12. Das rohrartige Abgasführungselement 12 weist einen im Wesentlichen zylindrischen zentralen Abschnitt 14 und vorzugsweise an beiden Endbereichen jeweilige zylindrische Endabschnitte 16 bzw. 18 auf. Im Übergang vom zentralen Abschnitt 14 zu den Endabschnitten 16, 18 ist jeweils ein beispielsweise konusartiger Erweiterungsbereich 20 bzw. 22 vorgesehen.

In dem Abgasführungselement 12 ist eine allgemein mit 24 bezeichnete Abgasbehandlungsanordnung, beispielsweise Katalysatoranordnung, vorgesehen. Diese umfasst eine Katalysatoreinheit 26 beispielsweise mit einem Substrat und daran getragenem Katalysatormaterial. An ihrem Außenumfangsbereich ist die Katalysatoreinheit 26 umgeben von einer Lagermatte 28, also einem mattenartigen, flexiblen Material, welches auch durch Presswirkung die Katalysatoreinheit 26 im Wesentlichen im zentralen Abschnitt 14 festhält.

In Zuordnung zu wenigstens einem der beiden in Richtung einer Längsachse A der Abgasführungsbaugruppe 10 gelegenen Endbereiche 30, 32 der Abgasbehandlungsanordnung 24 ist jeweils ein Stützring 36, 38 vorgesehen. Jeder Stützring 36, 38 stützt sich unter Presspassung nach radial außen hin am Innenumfang eines jeweiligen Endabschnitts 16, 18 des Abgasführungselements 12 ab und ist auf diese Art und Weise im Abgasführungselement 12 gehalten. Jeder Stützring 36, 38 überdeckt in axialer Richtung den radial äußeren Randbereich der Katalysatoreinheit 26. Auf diese Art und Weise ist zusätzlich zu der vorangehend bereits angesprochenen Presshalterung im zentralen Abschnitt 14 des Abgasführungselements 12 ein weiterer Beitrag für eine Abstützwirkung für die Katalysatoreinheit 26 bzw. allgemein die Abgasbehandlungsanordnung 24 vorgesehen. Weiter ist von Vorteil, dass durch das Überdecken des radial äußeren Randbereichs die Katalysatoreinheit 26 in diesem Bereich gegen Korrosion geschützt ist.

Jeder Stützring 36, 38 ist mit einem beispielsweise als Blechumformteil ausgebildeten Stützelementenkörper 40 aufgebaut, der im Querschnitt mit einem U-Profil ausgebildet ist. In dem U-Profilinnenraum ist eine Stützanordnung 42 vorgesehen, welche beispielsweise ein aus Drahtgestrick aufgebautes Stützelement 44 umfassen kann. Dieses flexible Stützelement 44 stützt die Katalysatoreinheit 26 axial ab, ohne dessen strukturelle Integrität, insbesondere das Katalysatormaterial, zu verletzen.

Ein Stützring gemäß dem Oberbegriff des Anspruchs 1 ist aus der JP 2000 018029 A bekannt. Ein Stützelementenkörper dieses bekannten Stützrings ist mit zwei jeweils mit U-förmigem Querschnitt ausgebildeten Körpersegmenten aufgebaut. In einem U-Profilinnenraum ist eine stoßabsorbiere Stützanordnung aus metallischem Maschenmaterial aufgenommen.

Die WO 2011/066041 A1 offenbart einen Stützring für ein Abgasführungssystem, bei welchem stoßabsorbierendes Material einer Stützanordnung durch in dieses Material eingreifende, hakenartige Vorsprünge an einem ringartigen Stützelementenkörper gehalten ist.

Die JP 2009 150242 A offenbart einen Stützring, dessen Stützanordnung in einem U-Profilinnenraum von Körpersegmenten eines Stützelementenkörpers durch Einpressen und damit Erzeugen eines Reibschlusses oder durch Punktschweißen festgelegt ist.

Es ist die Aufgabe der vorliegenden Erfindung, einen Stützring für ein Abgasführungssystem vorzusehen, welcher bei einfacher Herstellbarkeit eine zuverlässige Stützwirkung, beispielsweise für eine Abgasbehandlungsanordnung in einem Abgasführungssystem einer Brennkraftmaschine eines Fahrzeugs, erzeugen kann.

Erfindungsgemäß wird diese Aufgabe gelöst durch einen Stützring für ein Abgasführungssystem, insbesondere einer Brennkraftmaschine eines Fahrzeugs, gemäß Anspruch 1. Diese umfasst einen Stützelementenkörper mit einer Mehrzahl von Körpersegmenten und eine die Körpersegmente miteinander verbindende Stützanordnung.

Da bei dem erfindungsgemäßen Stützring der Stützelementenkörper eine Mehrzahl von Körpersegmenten umfasst, also mit einer Mehrzahl von zusammen den Stützelementenkörper bereitstellenden Bauteilen aufgebaut ist, kann jedes dieser Körpersegmente in einfacher, gleichwohl jedoch präziser Art und Weise beispielsweise durch Umformen eines Blechrohlings generiert werden, so dass in seiner Gesamtheit der Stützelementenkörper beispielsweise mit kreisringartiger Struktur und einer Mehrzahl von in Umfangsrichtung aufeinander folgenden Körpersegmenten aufgebaut sein kann. Da keines der Körpersegmente sich über einen gesamten Umfangsbereich erstrecken muss, können diese auch bei der grundsätzlich gekrümmten Konfiguration mit hoher Fertigungspräzision bereitgestellt werden, so dass einerseits eine zuverlässige Stützwirkung nach radial außen erzeugt werden kann, um den Stützring in einem Abgasführungselement halten zu können, andererseits aber zuverlässig auch die Abstützwirkung für eine Abgasbehandlungsanordnung generiert werden kann.

Um den strukturellen Zusammenhalt des Stützrings in einfacher Weise bereitstellen zu können, wird vorgeschlagen, dass wenigstens zwei Körpersegmente in einander gegenüberliegenden Körpersegmentendbereichen aneinander angrenzen, und dass die Stützanordnung die Körpersegmente miteinander verbindet. Bei dem erfindungsgemäßen Stützring erfüllt die Stützanordnung also nicht nur die Funktionalität zum Abstützen beispielsweise einer Abgasbehandlungsanordnung, sondern sorgt auch dafür, dass die grundsätzlich voneinander getrennt aufgebauten Körpersegmente miteinander verbunden werden.

Um das Auftreten von Zwängungen beim Eingliedern eines erfindungsgemäßen Stützrings in ein beispielsweise rohrartiges Abgasführungselement vermeiden zu können, wird vorgeschlagen, dass zwischen den Körpersegmentendbereichen ein Zwischenraum gebildet ist.

Wenigstens ein, vorzugsweise jedes Körpersegment ist mit einem U-Profil ausgebildet, wobei die Stützanordnung wenigstens teilweise in einem U-Profilinnenraum aufgenommen ist.

Um die Stützwechselwirkung des Stützelements beispielsweise mit einer Abgasbehandlungsanordnung bereitstellen zu können bzw. nicht zu beeinträchtigen, wird weiter vorgeschlagen, dass das U-Profil einen radial inneren U-Schenkel, einen radial äußeren U-Schenkel und einen die U-schenkel verbindenden Verbindungsbereich aufweist, und dass ein U-Schenkel, vorzugsweise der radial innere U-Schenkel, kürzer ist, als der andere U-Schenkel. Vorteilhafterweise erstreckt sich dabei dann die Stützanordnung in Richtung vom Verbindungsbereich weg wenigstens über den kürzeren U-Schenkel hinaus.

Zur Abstützwechselwirkung beispielsweise mit einer Abgasbehandlungsanordnung wird vorgeschlagen, dass die Stützanordnung flexibel ist. Vorteilhafterweise ist sie auch ringartig, vorzugsweise geschlossen ringartig ausgebildet, so dass über den gesamten Umfangsbereich einerseits die Stützwirkung erlangt werden kann, andererseits aber auch der Zusammenhalt der einzelnen Körpersegmente des Stützelementenkörpers erreicht wird.

Um eine kostengünstige Herstellbarkeit zu gewährleisten, andererseits jedoch auch einen Aufbau zu erlangen, welcher für die vergleichsweise aggressive Umgebung in einem Abgasführungssystem geeignet ist, kann weiter vorgesehen sein, dass wenigstens ein Körpersegment, vorzugsweise jedes Körpersegment, als Blechumformteil ausgebildet ist.

Um auch die Stützanordnung für die vergleichsweise aggressive Umgebung geeignet auszugestalten, ist diese mit Drahtmaterial aufgebaut, vorzugsweise mit Drahtgestrick, Drahtgewirk, Drahtgeflecht oder Drahtgewebe, also allgemein einem Material, das z.B. aus einer Mehrzahl von Drahtfilamenten einen Volumenkörper bereitstellt.

Um einen stabilen Zusammenhalt zu gewährleisten, ist vorzugsweise jedes Körpersegment mit der Stützanordnung durch Reibschluss und Materialschluss fest verbunden. Die vorliegende Erfindung betrifft ferner eine Abgasführungsbaugruppe für ein Abgasführungssystem, insbesondere für eine Brennkraftmaschine eines Fahrzeugs, umfassend ein rohrartiges Abgasführungselement, eine in dem Abgasführungselement angeordnete Abgasbehandlungsanordnung, vorzugsweise Katalysatoranordnung, sowie an wenigstens einem Endbereich der Abgasbehandlungsanordnung einen Stützring mit dem vorangehend beschriebenen Aufbau.

Die vorliegende Erfindung wird nachfolgend mit Bezug auf die beiliegenden Figuren detailliert beschrieben. Es zeigt:
- Fig. 1: eine Draufsicht auf einen Stützring einer ersten Ausgestaltungsform;
- Fig. 2: eine Draufsicht auf einen Stützring einer zweiten Ausgestaltungsform;
- Fig. 3: eine Querschnittdarstellung des Stützrings der Fig. 1, geschnitten längs einer Radiallinie III-III in Fig. 1;
- Fig. 4: eine Längsschnittansicht einer Abgasführungsbaugruppe für ein Abgasführungssystem.

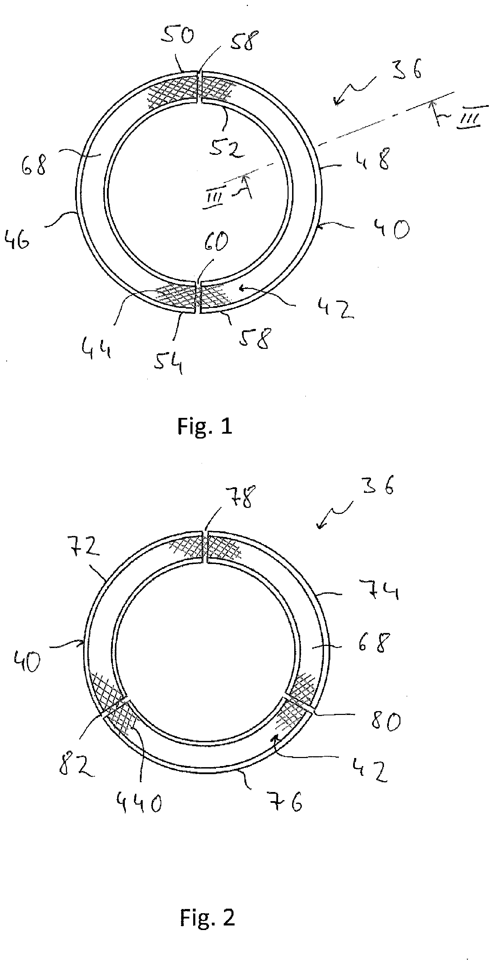

Eine Abgasführungsbaugruppe 10, bei welcher ein erfindungsgemäß aufgebauter Stützring zum Einsatz kommen kann, wurde vorangehend mit Bezug auf die Fig. 4 beschrieben, so dass auf die diesbezüglichen Ausführungen verwiesen werden kann. Nachfolgend wird mit Bezug auf die Fig. 1 bis 3 der Aufbau eines Stützrings beschrieben, der beispielsweise als Stützring 36 oder als Stützring 38 bei dem in Fig. 4 gezeigten Aufbau eingesetzt werden kann. Beispielhaft sei im Folgenden Bezug genommen auf den Stützring 36.

In Fig. 1 ist ein Aufbau gezeigt, bei welchem der Stützring 36 einen Stützelementenkörper 40 mit zwei Körpersegmenten 46, 48 aufweist. Jedes der Körpersegmente 46, 48 ist kreisringsegmentartig ausgebildet und erstreckt sich nahezu über einen Winkelbereich von 180°. Die jeweiligen Körpersegmentendbereiche 50, 52, 54, 56 der beiden Körpersegmente 46, 48 liegen einander unter Beibehalt eines Zwischenraums 58, 60 mit Umfangsabstand gegenüber, grenzen also in diesen Bereichen aneinander an.

Wie die Fig. 3 dies anhand des Körpersegments 48 beispielhaft zeigt, ist der Stützelementenkörper 40 bzw. sind die Körpersegmente 46, 48 im Querschnitt mit U-Profil ausgebildet. Sie umfassen einen bezüglich der Ringstruktur radial inneren U-Schenkel 62 und einen radial äußeren U-Schenkel 64. Diese beiden sich beispielsweise im Wesentlichen parallel zueinander erstreckenden U-Schenkel 62, 64 sind durch einen beispielsweise im Wesentlichen plan ausgebildeten Verbindungsbereich 66 miteinander verbunden. Jedes der Körpersegmente 46, 48 kann in einfacher Art und Weise als Blechumformteil bereitgestellt werden. Da keines der Körpersegmente 46, 48 sich im Wesentlichen über einen gesamten Umfangsbereich erstreckt, können diese Körpersegmente 46, 48 auch bei der vorangehend beschriebenen Herstellungsmethode im Wesentlichen verzugfrei bereitgestellt werden.

In einen jeweiligen U-Profilinnenraum 68 des Stützelementenkörpers 40 bzw. der Körpersegmente 46, 48 ist das vorangehend bereits angesprochene Stützelement 44 der Stützanordnung 42 eingesetzt. Das beispielsweise mit Drahtmaterial, beispielsweise Drahtgestrick oder dergleichen, aufgebaute Stützelement 44 erstreckt sich vorzugsweise im Wesentlichen ringartig und unterbrechungsfrei über den gesamten Umfang des Stützelementenkörpers 40 und überbrückt insbesondere die Zwischenräume 58, 60. Auf diese Art und Weise werden die beiden Körpersegmente 46, 48 zum Bereitstellen der ringartigen Struktur des Stützrings 36 zusammengehalten.

Um einen stabilen Verbund des Stützelements 44 mit den Körpersegmenten 46, 48 zu erreichen, ist an mehreren Umfangspositionen durch lokales Verpressen der Gestrickstruktur des Stützelements 44 dieses in den U-Profilinnenraum 68 so eingepresst, dass es unter Reibpressung an den U-Schenkeln 62, 64 anliegt und gegen Herausrutschen gehalten ist. Zusätzlich ist an diesen Verpressungsbereichen ein Materialschluss durch Verschweißung 70 generiert. Hierzu sind insbesondere die vorangehend angesprochenen Verpressungsbereiche geeignet, da in diesen Bereichen die Gestrickstruktur des Stützelements 44 verdichtet ist und somit für einen Schweißvorgang bessere Konditionen für den Stromfluss geschaffen sind. Vorzugsweise sind bei jedem der beiden Körpersegmente 46, 48 wenigstens zwei derartige Anbindungsbereiche geschaffen.

Man erkennt in Fig. 3 deutlich, dass die beiden U-Schenkel 62, 64 ausgehend vom Verbindungsbereich 66 unterschiedliche Erstreckungslängen aufweisen. Der radial inneren der beiden U-Schenkel 62, 64 ist kürzer, als der radial äußere. Wie dies in Fig. 4 zu erkennen ist, ist damit gewährleistet, dass der näherungsweise im radialen Mittenbereich des Stützelements 44 endende äußere Randbereich der Katalysatoreinheit 26 sich axial am Stützelement 44 abstützen kann, dabei jedoch der radial innere U-Schenkel 62 noch axialen Abstand zur Katalysatoreinheit 26 aufweist, so dass die Abstützwechselwirkung nicht beeinträchtigt wird.

Eine alternative Ausgestaltungsform des Stützrings 36 ist in Fig. 2 gezeigt. Hier ist der Stützelementenkörper 40 mit drei Körpersegmenten 72, 74, 76 und dazwischen jeweils gebildeten Zwischenräumen 78, 80, 82 aufgebaut. Auch hier wird der strukturelle Zusammenhalt der Körpersegmente 72, 74, 76 durch das im U-Profilinnenraum 68 sich vorzugsweise über den gesamten Umfang erstreckende Stützelement 44 der Stützanordnung 42 bereitgestellt. Jedes der Körpersegmente 72, 74, 76 weist eine Umfangserstreckung über einen Winkelbereich von etwa 120° auf, so dass diese noch mit höherer Fertigungspräzsion ohne der Gefahr des Verziehens beim Umformen eines Blechrohlings bereitgestellt werden können. Ebenso wie bei der vorangehend beschriebenen Ausgestaltungsform sind vorzugsweise alle Körpersegmente zueinander baugleich, so dass die Anzahl der verschiedenen zur Fertigung eines derartigen Stützrings bereitzuhaltenden Bauteile klein ist.

Mit der erfindungsgemäßen Ausgestaltung eines Stützrings wird es möglich, bei einfachem, gleichwohl jedoch präzise zu fertigendem Aufbau ein Mittel bereitzustellen, welches eine Abgasbehandlungsanordnung, beispielsweise eine Katalysatoranordnung, zuverlässig in einem rohrartigen Abgasführungselement eines Abgasführungssystems einer Brennkraftmaschine haltern kann und insbesondere auch im radial äußeren Randbereich eine Schutzwirkung gegen Korrosion bereitstellen kann. Durch die aufgrund des erfindungsgemäßen Aufbaus vorgesehene Flexibilität auch in Umfangs- und somit Radialrichtung wird weiterhin dafür gesorgt, dass das Stützelement selbst zuverlässig in einem rohrartigen Abgasführungselement gehaltert wird, ohne dass hierfür zusätzliche Befestigungsmaßnahmen erforderlich sind.

## Patentansprüche

1. Stützring für ein Abgasführungssystem, insbesondere einer Brennkraftmaschine eines Fahrzeugs, umfassend einen Stützelementenkörper (40) mit einer Mehrzahl von Körpersegmenten (46, 48; 72, 74, 76) und eine die Körpersegmente (46, 48; 72, 74, 76) miteinander verbindende, mit Metalldrahtmaterial aufgebaute Stützanordnung (42), wobei wenigstens ein Körpersegment (46, 48; 72, 74, 76) mit U-Profil ausgebildet ist und die Stützanordnung (42) wenigstens teilweise in einem U-Profilinnenraum (68) des wenigstens ein Körpersegments (46, 48; 72, 74, 76) aufgenommen ist, **dadurch gekennzeichnet, dass** das wenigstens eine mit U-Profil ausgebildete Körpersegment (46, 48; 72, 74, 76) mit der Stützanordnung (42) durch Reibschluss verbunden ist, wobei der Reibschluss durch lokales Verpressen der Stützanordnung (42) zum Bilden mehrerer Verpressungsbereiche und dadurch Einpressen der Stützanordnung (42) in den U-Profilinnenraum (68) und Anliegen der Stützanordnung (42) an U-Schenkeln (62, 64) des wenigstens einen Körpersegments (46,48; 72,74, 76) unter Reibpressung bereitgestellt ist, und dass an den Verpressungsbereichen durch Verschweißung ein Materialschluss zwischen der Stützanordnung (42) und dem wenigstens einen Körpersegment (46,48; 72,74, 76) generiert ist.

2. Stützring nach Anspruch 1, **dadurch gekennzeichnet, dass** wenigstens zwei Körpersegmente (46, 48; 72, 74, 76) in einander gegenüberliegenden Körpersegmentendbereichen (50, 52, 54, 56) aneinander angrenzen, und dass die Stützanordnung (42) die Körpersegmente (46, 48; 72, 74, 76) miteinander verbindet.

3. Stützring nach Anspruch 2, **dadurch gekennzeichnet, dass** zwischen den Körpersegmentendbereichen ein Zwischenraum (58, 60; 78, 80, 82) gebildet ist.

4. Stützring nach einem der Ansprüche 1-3, **dadurch gekennzeichnet, dass** alle Körpersegmente (46, 48; 72, 74, 76) mit U-Profil ausgebildet sind.

5. Stützring nach Anspruch 4, **dadurch gekennzeichnet, dass** das U-Profil einen radial inneren U-Schenkel (62), einen radial äußeren U-Schenkel (64) und einen die U-Schenkel (62, 64) verbindenden Verbindungsbereich (66) aufweist, und dass ein U-Schenkel (62), vorzugsweise der radial innere U-Schenkel (62), kürzer ist, als der andere U-Schenkel (64).

6. Stützring nach Anspruch 5, **dadurch gekennzeichnet, dass** die Stützanordnung (42) sich in Richtung vom Verbindungsbereich (66) weg wenigstens über den kürzeren U-Schenkel (62) hinaus erstreckt.

7. Stützring nach einem der Ansprüche 1-6, **dadurch gekennzeichnet, dass** die Stützanordnung (42) flexibel ist, oder/und dass die Stützanordnung (42) ringartig, vorzugsweise geschlossen ringartig, ausgebildet ist, oder/und dass wenigstens ein Körpersegment (46, 48; 72, 74, 76), vorzugsweise jedes Körpersegment (46, 48; 72, 74, 76), als Blechumformteil ausgebildet ist.

8. Stützring nach Anspruch 7, **dadurch gekennzeichnet, dass** die Stützanordnung (42) mit Drahtgestrick, Drahtgewirk, Drahtgeflecht oder Drahtgewebe aufgebaut ist.

9. Stützring nach einem der Ansprüche 1-8, **dadurch gekennzeichnet, dass** jedes Körpersegment (46, 48; 72, 74, 76), mit der Stützanordnung (42) durch Reibschluss und Materialschluss fest verbunden ist.

10. Abgasführungsbaugruppe für ein Abgasführungssystem, insbesondere für eine Brennkraftmaschine eines Fahrzeugs, umfassend ein rohrartiges Abgasführungselement (12), eine in dem Abgasführungselement (12) angeordnete Abgasbehandlungsanordnung (24), vorzugsweise Katalysatoranordnung, sowie an wenigstens einem Endbereich (30, 32) der Abgasbehandlungsanordnung (24) einen Stützring (36, 38) nach einem der vorangehenden Ansprüche.

## Claims

1. Support ring for an exhaust gas duct system, especially of an internal combustion engine of a vehicle, comprising a support element body (40) with a plurality of body segments (46, 48; 72, 74, 76) and a support arrangement (42) formed with a metallic wire material connecting the body segments (46, 48; 72, 74, 76) to one another, wherein at least one body segment (46, 48; 72, 74, 76) has a U-profile design, and wherein the support arrangement (42) is at least partially accommodated in a U-profile interior space (68) of the at least one body segment (46, 48; 72, 74, 76), **characterised in that** the at least one body segment (46, 48; 72, 74, 76) with a U-profile design is connected to the support arrangement (42) by frictional connection, wherein the frictional connection is provided by local pressing of the support arrangement (42) for forming several pressing areas and thereby compaction of the support arrangement (42) into the U-profile inner space (68) and abutment of the support arrangement (42) at U-legs (62, 64) of the at least one body segment (46, 48; 72, 74, 76) under frictional pressing, and **in that** at the pressing areas a material connection between the support arrangement (42) and the at least one body segment (46, 48; 72, 74, 76) is generated by welding.

2. Support ring in accordance with claim 1, **characterised in that** at least two body segments (46, 48; 72, 74, 76) are adjacent to one another in opposing body segment end areas (50, 52, 54, 56), and that the support arrangement (42) connects the body segments (46, 48; 72, 74, 76) to one another.

3. Support ring in accordance with claim 2, **characterised in that** a gap (58, 60; 78, 80, 82) is formed between the body segment end areas.

4. Support ring in accordance with one of the claims 1-3, **characterised in that** all body segments (46, 48; 72, 74, 76) have a U-profile design.

5. Support ring in accordance with claim 4, **characterised in that** the U-profile has a radially inner U-leg (62), a radially outer U-leg (64) and a connection area (66) connecting the U-legs (62, 64), and that one U-leg (62), preferably the radially inner U-leg (62), is shorter than the other U-leg (64).

6. Support ring in accordance with claim 5, **characterised in that** the support arrangement (42) extends in the direction away from the connection area (66) at least beyond the shorter U-leg (62).

7. Support ring in accordance with one of the claims 1-6, **characterised in that** the support arrangement (42) is flexible, or/and that the support arrangement (42) has a ring-like, and preferably a closed ring-like design, or/and that at least one body segment (46, 48; 72, 74, 76), preferably each body segment (46, 48; 72, 74, 76) is designed as a shaped sheet metal part.

8. Support ring in accordance with claim 7, **characterised in that** the support arrangement (42) is made with wire knitted fabric, wire knitting, wire mesh or wire cloth.

9. Support ring in accordance with one of the claims 1-8, **characterised in that** each body segment (46, 48; 72, 74, 76), is rigidly connected to the support arrangement (42), by frictional connection and material connection.

10. Exhaust gas duct assembly unit for an exhaust gas duct system, especially for an internal combustion engine of a vehicle, comprising a tubular exhaust gas duct element (12), an exhaust gas treatment device (24), preferably a catalytic converter device, arranged in the exhaust gas duct element (12), as well as on at least one end area (30, 32) of the exhaust gas treatment device (24) a support ring (36, 38) in accordance with one of the above claims.

## Revendications

1. Anneau de support pour un système de guidage de gaz d'échappement, en particulier pour un moteur de combustion interne d'un véhicule, comprenant un corps de membre de support (40) avec une pluralité de segments de corps (46, 48; 72, 74, 76) et un arrangement de support (42) construit avec du matériau de fil de fer connectant les segments de corps (46, 48; 72, 74, 76) l'un à l'autre, au moins un segment de corps (46, 48; 72, 74, 76) étant adapté avec un profile en U et l'arrangement de support (42) étant au moins partiellement reçu dans un espace intérieur du profile en U (68) dudit au moins un segment de corps (46, 48; 72, 74, 76), **caractérisé en ce que** ledit au moins un segment de corps (46, 48; 72, 74, 76) adapté avec un profile en U est connecté à l'arrangement de support (42) par connexion à friction, la connexion à friction étant prévue par pressage local de l'arrangement de support (42) pour former plusieurs régions de pressage et ainsi par pressage de l'arrangement de support (42) dans l'espace intérieur du profile en U (68) et appui de l'arrangement de support (42) aux membres en U (62, 64) dudit au moins un segment de corps (46, 48; 72, 74, 76) sous pressage à friction, et **en ce qu'**une connexion de matériau entre l'arrangement de support (42) et ledit au moins un segment de corps (46, 48; 72, 74, 76) est générée aux régions de pressage par soudage.

2. Anneau de support selon la revendication 1, **caractérisé en ce qu'**au moins deux segments de corps (46, 48; 72, 74, 76) sont en appui l'un à l'autre dans des sections d'extrémité de segment de corps (50, 53, 54, 56), et **en ce que** l'arrangement de support (42) lie les segments de corps (46, 48; 72, 74, 76) l'un à l'autre.

3. Anneau de support selon la revendication 2, **caractérisé en ce qu'**un espace intermédiaire (58, 60;78, 80, 82) est formé entre les sections d'extrémité de segment de corps.

4. Anneau de support selon une des revendications 1 à 3, **caractérisé en ce que** tous les segments de corps (46, 48; 72, 74, 76) sont adaptés avec un profil en U.

5. Anneau de support selon la revendication 4, **caractérisé en ce que** le profil en U comprend une jambe en U radialement intérieur (62), une jambe en U radialement extérieur (64) et une section de connexion (66) connectant les jambes en U (62, 64), et **en ce qu'**une jambe en U (62), de préférence la jambe en U radialement intérieur (62), est plus courte que l'autre jambe en U (64).

6. Anneau de support selon la revendication 5, **caractérisé en ce que** l'arrangement de support (42) s'étend dans un sens s'éloignant de la section de connexion (66) au moins au-delà du membre en U (62) plus court.

7. Anneau de support selon une des revendications 1 à 6, **caractérisé en ce que** l'arrangement de support (42) est flexible, ou/et que l'arrangement de support (42) est adapté de manière annulaire, de préférence en anneau fermé, ou/et **en ce qu'**au moins un segment de corps (46, 48; 72, 74, 76), de préférence chaque segment de corps (46, 48; 72, 74, 76), est adapté en forme de pièce de tôle par formage.

8. Anneau de support selon la revendication 7, **caractérisé en ce que** l'arrangement de support (42) est fabriqué avec du maillage métallique, entrelac métallique, treillis métallique ou tissu métallique.

9. Anneau de support selon une des revendications 1 à 8, **caractérisé en ce que** chaque segment de corps (46, 48; 72, 74, 76) est fermement connecté à l'arrangement de support (42) par connexion à friction et connexion de matériau.

10. Module de guidage de gaz d'échappement pour un système de guidage de gaz d'échappement, en particulier pour un moteur de combustion interne d'un véhicule, comprenant un membre de guidage de gaz d'échappement tubulaire (12), un arrangement de traitement de gaz d'échappement (24), de préférence un arrangement de catalyseur, arrangé dans le membre de guidage de gaz d'échappement (12), ainsi qu'un anneau de support (36, 38) selon une des revendications précédentes à au moins une région d'extrémité (30, 32) de l'arrangement de traitement de gaz d'échappement (24).
